Europäisches Patentamt

European Patent Office

Office européen des brevets

(19)

(11) Publication number: **0 227 113**
A2

(12) # EUROPEAN PATENT APPLICATION

(21) Application number: **86118015.6**

(22) Date of filing: **23.12.86**

(51) Int. Cl.⁴: **G 05 B 19/405**

(30) Priority: **23.12.85 JP 287844/85**

(43) Date of publication of application:
**01.07.87 Bulletin 87/27**

(84) Designated Contracting States:
**CH DE FR GB IT LI NL**

(71) Applicant: **KITAMURA MACHINERY CO.,LTD.**
**1870 Toide-Komyoji**
**Takaoka-shi Toyama-ken(JP)**

(72) Inventor: **Kitamura, Koichiro**
**3-11-5 Ekinan**
**Takaoka-shi Toyama-ken(JP)**

(74) Representative: **Patentanwälte Ruff und Beier**
**Neckarstrasse 50**
**D-7000 Stuttgart 1(DE)**

(54) **CNC machine tool.**

(57) A CNC machine tool comprising a machine body (3) having a base (6), a CNC means (4) including a CPU (67), an operator control panel (5) electrically connected to the CNC means (4), a first table (7) for supporting a workpiece (W), a servomotor (9) electrically connected to the CNC means (4) for actuating the first table (7), a second table (8) along which the first table (7) moves, a servomotor (10) electrically connected to the CNC means (4) for moving the second table (8) along the base (6), a spindle head (11) arranged at the machine body (3), a spindle (15) attached to the spindle head (11), a tool (1) attached to the spindle (11) for cutting the workpiece (W), a read/write means (110) electrically connected to the CNC means (4), and a memory card (100) set in the read/write means (110) so that the CNC machine tool can operate according to programmed data memorized in the memory card (100).

EP 0 227 113 A2

TITLE OF THE INVENTION

CNC MACHINE TOOL

BACKGROUND OF THE INVENTION

This invention relates to a computerized numerical control type (CNC) machine tool.

The programmed data in a tape is used to be read by a reader and then sent to a CNC means so that a motor for a shaft and/or a motor for a spindle in a CNC machine tool can be controlled.

However, it is a troublesome job to handle a long tape within a plant or between plural plants.

SUMMARY OF THE INVENTION

The object of this invention is to provide a CNC machine tool in which programmed data can be conveniently used.

According to this invention, there is provided a CNC machine tool comprising a machine body having a base, a CNC means including a CPU, an operator control means electrically

1

connected to the CNC means, a first table for supporting a workpiece, a servomotor electrically connected to the CNC means for actuating the first table, a second table along which the first table moves, a servomotor electrically connected to the CNC means for moving the second table along the base, a spindle head arranged at the machine body, a spindle attached to the spindle head, a tool attached to the spindle for cutting the workpiece, a read/write means electrically connected to the CNC means, a memory card set in the read/write means so that the CNC machine tool can operate according to programmed data memorized in the memory card.

BRIEF DESCRIPTION OF THE DRAWINGS

Fig. 1 is a front view showing a CNC machine tool according to this invention;

Fig. 2 is a side view of the CNC machine tool shown in Fig. 1;

Fig. 3 is an explanatory view showing a CNC means, a memory card, a read/write means and a motor for use in the CNC machine tool;

Fig. 4 is a perspective view showing a memory card for use in the CNC machine tool; and

Fig. 5 is a perspective view showing a further memory card for use in the CNC machine tool.

DESCRIPTION OF THE PREFERRED EMBODIMENT

Programmed data for controlling a CNC (computerized numerical control) type machine tool 2 is memorized in a memory card 100 which is preferably an IC memory card, for example, such as a SRAM (Static Randum Acces Memory) card, a ROM (Read Only Memory) card such as a MASK-ROM card and an ONE-TIME-ROM card, a PROM (Programmable Read Only Memory) card, an EP-ROM (Erasable Programmable Read Only Memory) card, an EEP-ROM (Electrically Erasable Programmable Read Only Memory) card, a DRAM (Dynamic Random Access Memory) card, a CPU loading type IC memory card which includes CPU, ROM and RAM, or an optical memory card.

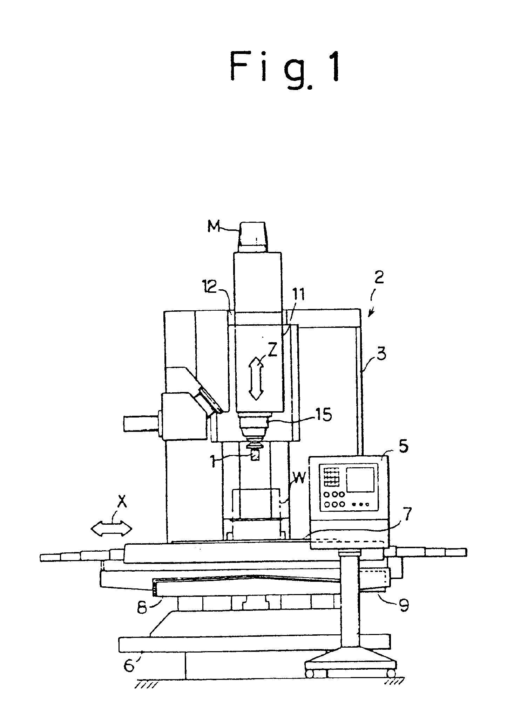

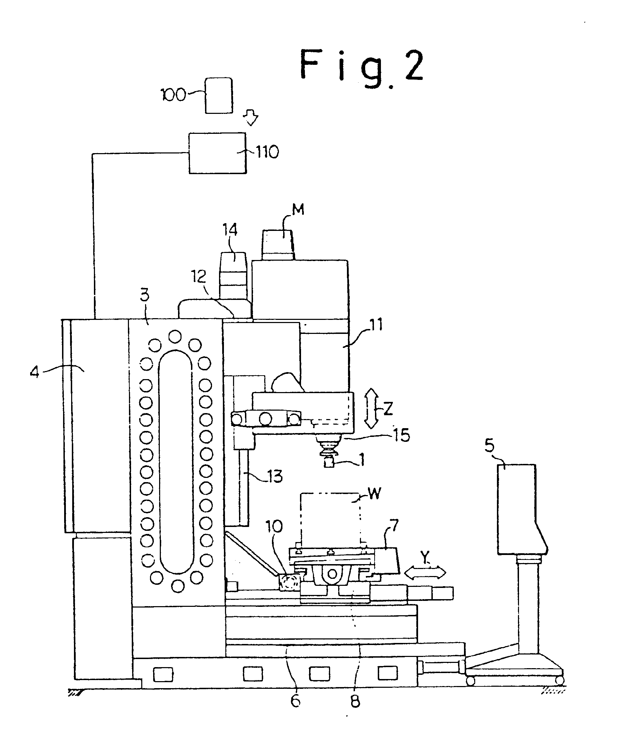

Referring to Figs. 1 and 2, the machine tool 2 includes a machine body 3, a CNC unit 4 and an operator control panel 5. A first table 7 and a second table 8 are provided on a base 6 of the machine body 3. The first table 7 can move in the direction of the arrow X (Fig. 1) along the second table 8 by means of a servomotor 9. The second table 8 can move in the direction of the arrow Y (Fig. 2) along the base 6 by means of a servomotor 10.

A spindle head 11 at the machine body 3 can move in the direction of the arrow Z (Fig. 2) along rails 13 attached to a column 12 by means of a servomotor 14. A spindle 15 is attached to the spindle head 11 for holding a tool 1. The spindle 15 together with the tool 1 rotates by means of a motor M. A workpiece W is attached to the first table 7.

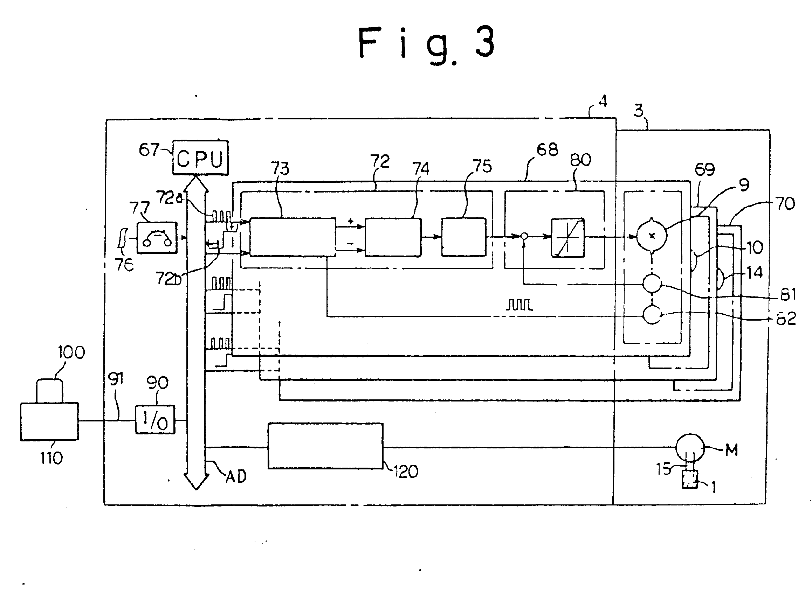

The CNC unit 4 is equipped with a CPU 67 as shown in Fig. 3. The programmed data in a NC tape 76 is read by a tape reader 77 so as to be sent to the CPU 67.

An input/output means 90 is connected through an address/data bus AD to the CPU 67. A read/write means 110 is connected to a data input/output line 91 of the input/ouput means 90 so as to write the given programmed data in the memory card 100 for the memorizing purpose and/or read the data therein. The memory card 100 is preferably a S-RAM card having a storage capacity of 128 Kbit, a length of 85.6 mm, a width of 54 mm and a thickness of 1.8 mm.

The programmed data is read by the tape reader 77 and then sent through the address/data bus AD, the input/output means 90 and the read/write means 110 to the memory card 100.

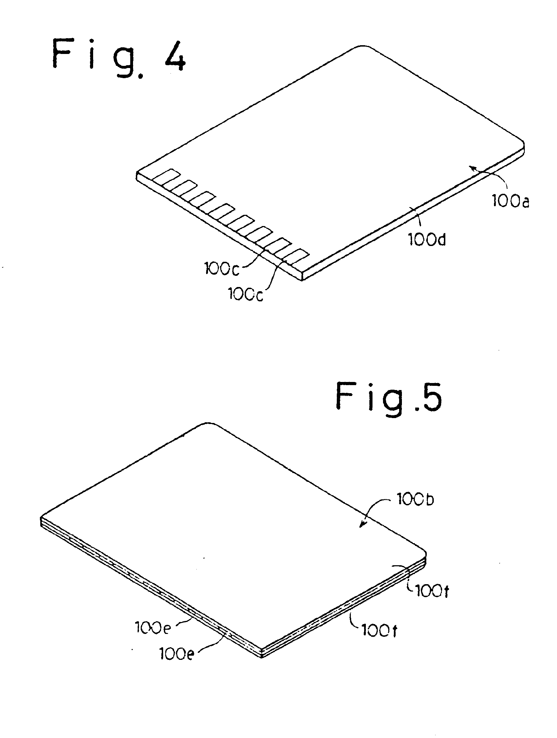

Fig. 4 shows a mode of the memory card 100, and Fig. 5 shows a further mode of the memory card 100. In the memory card 100 of Fig. 4, plural terminals 100c are placed on an end portion of a panel 100d. In the memory card 100 of Fig. 5, plural terminals 100e are positioned between two panels 100f. Letters can be easily written on the panels 100d, 100f.

The motor M is connected through a controller 120 to the address/data bus AD. The controller 120 is used to control the speed of the motor M according to the programmed data.

Servo means 68 for controlling the servomotor 9 (Fig. 1) is connected through the address/data bus AD to the CPU 67. Servo means 69, 70 for controlling the servomotors 10, 14 are connected to the address/data bus AD. The servo means 68, 69, 70 are substantially identical in construction. Therefore, only the servo means 68 will be explained as a typical example, and the servo means 69, 70 will not be explained.

A position control means 72 includes a pulse-shaping direction-discriminating circuit 73, a deviation counter 74 and a D/A converter 75. The CPU 67 sends the control signals 72b for controlling the movement pulses 72a and the rotation direction of the servomotor 9 to the pulse-shaping direction-discriminating circuit 73 according to the programmed data. A rear portion of the position control means 72 is connected to a speed control means 80 which is in turn connected to the servomotor 9. An output shaft of the servomotor 9 is connected to a tacho- generator 81 and a pulse-generator 82. The tacho-generator 81 is used to detect a rotation speed of the servomotor 9. An output voltage of the tacho-generator 81 is proportional to the rotation speed thereof and a polarity of the output valtage is dependent on a rotation direction of the servomotor 9. The pulse-generator 82 is used to detect a rotation angle of the servomotor 9. The output pulse number of the pulse-generator 82 is proportional to a rotation angle thereof, and the polarity of the pulse output is dependent on the rotation direction of the servomotor 9.

The tacho-generator 81 is connected to the speed control means 80. The pulse-generator 82 is connected to the pulse-shaping direction-discriminating circuit 73.

The deviation counter 74 produces as an error output voltage a difference between the number of the movement pulses 72a and the number of the movement feed-back pulses fed back from the pulse-generator 82. The value of the output voltage is proportional to the value of the difference, and the polarity of the output is dependent on the polarity of the difference.

The error output voltage, which is digital, is converted by the D/A converter 75 to an analog signal. This analog signal is sent to the speed control means 80 as a speed control voltage. Upon receipt of the analog signal, the servomotor 9 starts rotating whereby the pulse-generator 82 produces pulses in proportion to the rotation angle thereof. The pulses are sent to the deviation counter 74 so that the pulses remaining in the deviation counter 74 are reduced.

If the movement pulses 72a are sent to the deviation counter 74, the servomotor 9 continues to rotate while the deviation counter 74 holds the given pulses. The rotation speed of the servomotor 9 is proportional to the frequency of the movement control pulses 72a.

If input of the movement control pulses 72a stops, then the servomotor 9 continues to rotate until the pulses remaining in the deviation counter 74 become zero. The servomotor 9 stops when the pulses become zero.

The servomotors 10, 14 in the servo means 69, 70 are also controlled in the above-stated manner.

The motor M rotates at a predetermined speed according to the programmed data. The servomotors 9, 10, 14 and the motor M independently rotate according to the programmed data.

Referring to Figs. 1 to 3, the operation of the CNC machine tool will be explained.

In case of the memory card 100 in which no programmed data is memorized, it is preferably a S-RAM card, a D-RAM card, an EEP-ROM card or a CPU loading type IC memory card. First, the memory card 100 is set in the read/write means 110. The programmed data in the tape 76 is read by the tape reader 77 and then sent by way of the read/write means 110 to the memory card 100. Next, the programmed data memorized in the memory card 100 is sent through the read/write means 110 and the bus AD to the CPU 67. According to the programmed data, the servomotors 9, 10 and the motor M rotate. For instance, the first table 7 moves in the direction of the arrow X while the second table 8 moves in the direction of the arrow Y so that the workpiece W moves from a start point to a predetermined point as shown in Fig. 1. The spindle head 11 moves down while the spindle 15 rotates at a given speed by means of the motor M.  As a result, the workpiece W is cut by the tool 1 such as a drill according  to the programmed data.  After that, the spindle head 11 moves up while the spindle 15a stops.

As can be understood from the foregoing, once the programmed data is memorized in the memory card 100, the CNC machine tool 2 automatically operates according to the programmed date in the memory card 100 set in the read/write means 110.

In case of the memory card 100 in which some desired programmed data is already memorized, it is preferably a ROM card, a PROM card, an EP-ROM card, an EEP-ROM card, a CPU loading type IC memory card, or an optical memory card.

First, the memory card 100 is set into the read/write means 110 so that the programmed data already memorized in the memory card 100 is sent through the read/write means 110 to the CPU 67. According to the programmed data, the servomotors 9, 10, 14 and the motor M rotate. For instance, the first table 7 moves in the direction of the arrow X while the second table 8 moves in the direction of the arrow Y whereby the workpiece W moves from a start point to a predetermined point as shown in Fig. 1. The spindle head 11 moves down in the directin of the arrow Z while the spindle 15 rotates at a given speed by means of the motor M. Thus, the workpiece W is cut by the tool 1, for example, such as a drill. When the cutting operation is finished, the spindle head 11 moves up while the spindle 15 stops.

According to this invention, as the programmed data is memorized in the memory card, it is very convenient to handle it within a plant or between plural plants.

WHAT IS CLAIMED IS:


1. A CNC machine tool comprising a machine body (3) having a base (6), a CNC means (4) including a CPU (67), an operator control means (5) electrically connected to the CNC means (4), a first table (7) for supporting a workpiece (W), a servomotor (9) electrically connected to the CNC means (4) for actuating the first table (7), a second table (8) along which the first table (7) moves, a servomotor (10) electrically connected to the CNC means (4) for moving the second table (8) along the base (6), a spindle head (11) arranged at the machine body (3), a spindle (15) attached to the spindle head (11), a tool (1) attached to the spindle (11) for cutting the workpiece (W), a read/write means (110) electrically connected to the CNC means (4), a memory card (100) set in the read/write means (110) so that the CNC machine tool can operate according to programmed data memorized in the memory card (100).

2. A CNC machine tool as defined in claim 1, wherein the memory card (100) is an IC card.

3. A CNC machine tool as defined in claim 1 or 2, wherein the memory card (100) is a SRAM card, a ROM card, a PROM card, an EP-ROM card, an EEP-ROM card, or a DRAM card.

4. A CNC machine tool as defined in one of the claims 1 - 3, wherein the memory card (100) is a SRAM card, a ROM card, a PROM card, an EP-ROM card, an EEP-ROM card or a DRAM card.

5. A CNC machine tool as defined in one of the claims 1 - 4, wherein the memory card (100) is a MASK-ROM card or an ONE-TIME-ROM.

6. A CNC machine tool as defined in one of the claims 1 - 5, wherein the memory card (100) is a CPU loading type IC memory.

7. A CNC machine tool as defined in one of the claims 1 - 6, wherein the memory card (100) is an optical memory card.

8. A CNC machine tool as defined in one of the claims 1 - 7, wherein the CNC means (4) includes a tape reader (77) connected through an address/data bus (AD) to the read/write means (110) so that the programmed data memorized in a tape (76) can be read by the tape reader (77) and then sent through the address/data bus (AD) to the read/write means (110) for the memorizing purpose.

Fig. 1

# Fig.2

# Fig. 3

0227113

# Fig. 4

100a

100d

100c

100c

# Fig.5

100b

100f

100f

100e

100e